# EUROPEAN PATENT APPLICATION

(11) **EP 4 733 901 A1**
(43) Date of publication of application: **29.04.2026**
(21) Application number: 24845758.2
(22) Date of filing: 24.05.2024
(51) Int. Cl.: G06F 3/01, G06T 19/00, G06F 3/04842, G06F 3/16, G06F 3/00

(54) **METHOD OF CONTROLLING DISPLAY MODULE AND ELECTRONIC DEVICE PERFORMING SAME METHOD**

(30) Priority: 24.07.2023 KR 20230096134; 23.08.2023 KR 20230110430
(71) Applicant: Samsung Electronics Co., Ltd., Suwon-si, Gyeonggi-do 16677 (KR)
(72) Inventor: KIM, Seungnyun, Suwon-si, Gyeonggi-do 16677 (KR); KIM, Kwangtai, Suwon-si, Gyeonggi-do 16677 (KR); SON, Dongil, Suwon-si, Gyeonggi-do 16677 (KR)
(74) Representative: HGF
(86) International application number: PCT/KR2024/007064
(87) International publication number: WO 2025/023454

(57) **Abstract**

Disclosed are a method of controlling a display module and an electronic device performing the method. The electronic device according to various embodiments may comprise a processor. The processor may receive, from a user, an input for displaying a first auxiliary virtual object or a second auxiliary virtual object. The processor may, when the electronic device is in an AR mode, control the display module to display the first auxiliary virtual object on the basis of a real object and spatial information about an external environment acquired using a camera. The processor may, when the electronic device is in a VR mode, control the display module to display the second auxiliary virtual object on the basis of a virtual object and an attribute of a virtual environment.

## Description

### TECHNICAL FIELD

The following disclosure relates to a method of controlling a display module and an electronic device for performing the method.

### BACKGROUND ART

Artificial intelligence (AI) assistants may mainly operate on smartphones, tablets, or personal devices.

Electronic devices used while being worn on heads of users may provide the users with functions of AI assistants through various methods.

The above information may be presented as a related art to help with the understanding of the disclosure. No arguments or decisions are raised to whether any of the above description is applicable as the prior art related to the present disclosure.

### DISCLOSURE OF THE INVENTION

### TECHNICAL SOLUTIONS

An electronic device according to various embodiments may include a processor. The processor may receive an input from a user to display a first auxiliary virtual object or a second auxiliary virtual object. When the electronic device is in an augmented reality (AR) mode, the processor may obtain a real object and spatial information based on an image of an external environment obtained using a camera. The processor may determine a shape and a position of the first auxiliary virtual object based on the real object and the spatial information. The processor may control a display module to display the first auxiliary virtual object based on the shape and the position of the first auxiliary virtual object. When the electronic device is in a virtual reality (VR) mode, the processor may determine a shape and a position of the second auxiliary virtual object based on an attribute of a virtual environment and a virtual object. The processor may control the display module to display the second auxiliary virtual object based on the shape and the position of the second auxiliary virtual object.

An electronic device according to various embodiments may include a processor. The processor may receive an input from a user to display a first auxiliary virtual object. The processor may control the display module to display the first auxiliary virtual object based on a real object and spatial information about an external environment obtained using a camera in the AR mode. In response to changing from the AR mode to the VR mode, the processor may determine a correlation between the AR mode and the VR mode. The processor may control the display module to display a second auxiliary virtual object corresponding to the first auxiliary virtual object in the VR mode based on the correlation.

A method of controlling a display module according to various embodiments may include receiving an input from a user to display a first auxiliary virtual object or a second auxiliary virtual object, when an electronic device is in an AR mode, obtaining a real object and spatial information based on an image of an external environment obtained using a camera, determining a shape and a position of the first auxiliary virtual object based on the real object and the spatial information, controlling a display module to display the first auxiliary virtual object based on the shape and the position of the first auxiliary virtual object, when the electronic device is in a VR mode, determining a shape and a position of the second auxiliary virtual object based on an attribute of a virtual environment and a virtual object, and controlling the display module to display the second auxiliary virtual object based on the shape and the position of the second auxiliary virtual object.

A method of controlling a display module according to various embodiments may include receiving an input from a user to display a first auxiliary virtual object, controlling the display module to display the first auxiliary virtual object based on a real object and spatial information about an external environment obtained using a camera in an AR mode, in response to changing from the AR mode to the VR mode, determining a correlation between the AR mode and the VR mode, and controlling the display module to display a second auxiliary virtual object corresponding to the first auxiliary virtual object in the VR mode based on the correlation.

### BRIEF DESCRIPTION OF DRAWINGS

FIG. 1 is a block diagram illustrating an electronic device in a network environment according to various embodiments.
FIG. 2 is a perspective view illustrating an internal configuration of a wearable electronic device, according to an embodiment.
FIGS. 3A and 3B are diagrams illustrating a front surface and a rear surface of a wearable electronic device according to an embodiment.
FIG. 4 is a flowchart of operations of a display module control method according to various embodiments.
FIG. 5 is a flowchart illustrating operations of an electronic device controlling a display module based on a correlation according to various embodiments.
FIGS. 6A and 6B are diagrams illustrating an operation of an electronic device displaying a third auxiliary virtual object according to various embodiments.
FIGS. 7A and 7B are diagrams illustrating an operation of an electronic device displaying a third auxiliary virtual object according to various embodiments.
FIGS. 8A and 8B are diagrams illustrating an operation of an electronic device displaying a third auxiliary virtual object according to various embodiments.
FIGS. 9A and 9B are diagrams illustrating an operation of an electronic device displaying a third auxiliary virtual object according to various embodiments.
FIGS. 10A, 10B, and 10C are diagrams illustrating an operation of an electronic device controlling a visual attribute of a first auxiliary virtual object according to various embodiments.
FIG. 11 is a flowchart illustrating operations of an electronic device controlling a display module based on a correlation according to various embodiments.
FIG. 12 is a block diagram illustrating an integrated intelligence system according to an embodiment.
FIG. 13 is a diagram illustrating a form in which relationship information on relationships between concepts and actions is stored in a database (DB), according to various embodiments.
FIG. 14 is a diagram illustrating a screen of a user terminal processing a received voice input through an intelligent app according to various embodiments.

### BEST MODE FOR CARRYING OUT THE INVENTION

Hereinafter, embodiments will be described in detail with reference to the accompanying drawings. When describing the embodiments with reference to the accompanying drawings, like reference numerals refer to like elements and a repeated description related thereto will be omitted.

As used herein, "A or B," "at least one of A and B," "at least one of A or B," "A, B or C," "at least one of A, B and C," and "at least one of A, B, or C," each of which may include any one of the items listed together in the corresponding one of the phrases, or all possible combinations thereof.

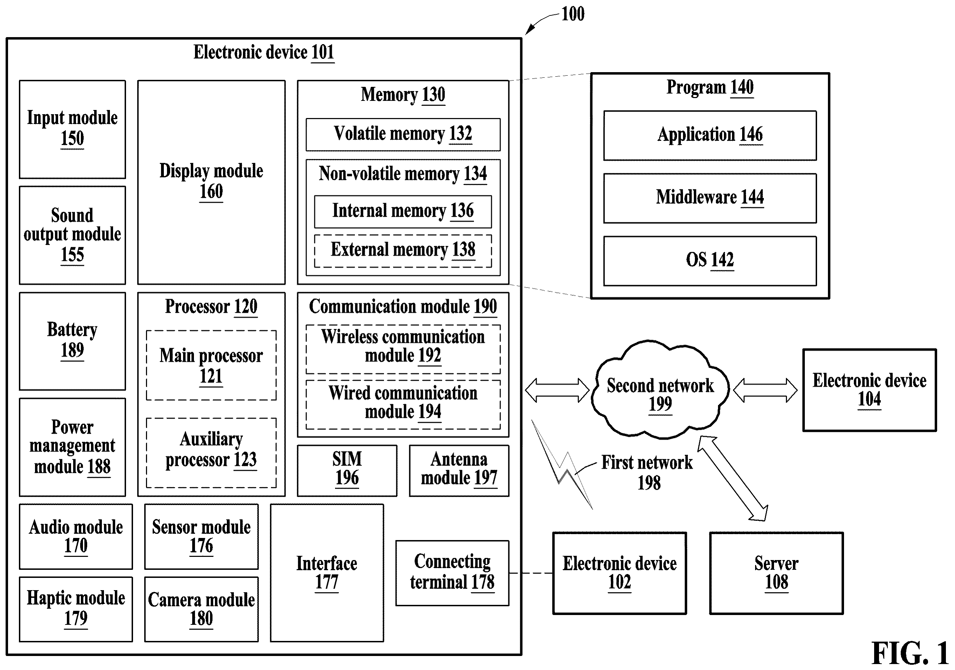

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or communicate with at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, and a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be integrated as a single component (e.g., the display module 160).

The processor 120 may execute, for example, software (e.g., a program 140) to control at least one other component (e.g., a hardware or software component) of the electronic device 101 connected to the processor 120, and may perform various data processing or computation. According to an embodiment, as at least a part of data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specified for processing of an artificial intelligence (AI) model. An AI model may be generated by machine learning. Such learning may be performed by, for example, the electronic device 101 in which AI is performed, or performed via a separate server (e.g., the server 108). Learning algorithms may include, but are not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The AI model may additionally or alternatively include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored as software in the memory 130, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g.V, a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing record. The receiver may be used to receive an incoming call. According to an embodiment, the receiver may be implemented separately from the speaker or as a part of the speaker.

The display module 160 may visually provide information to the outside (e.g., a user) of the electronic device 101. The display module 160 may include, for example, a display, a hologram device, or a projector and control circuitry to control a corresponding one of the display, the hologram device, and the projector. According to an embodiment, the display module 160 may include a touch sensor adapted to detect a touch, or a pressure sensor adapted to measure the intensity of force incurred by the touch.

The audio module 170 may convert a sound into an electric signal or vice versa. According to an embodiment, the audio module 170 may obtain the sound via the input module 150, or output the sound via the sound output module 155 or an external electronic device (e.g., the electronic device 102 such as a speaker or a headphone) directly or wirelessly connected to the electronic device 101.

The sensor module 176 may detect an operational state (e.g., power or temperature) of the electronic device 101 or an environmental state (e.g., a state of a user) external to the electronic device 101, and generate an electric signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electric signal into a mechanical stimulus (e.g., a vibration or a movement) or an electrical stimulus which may be recognized by a user via his or her tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, image signal processors, or flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently of the processor 120 (e.g., an AP) and that support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data correlation (IrDA)) or the second network 199 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multi components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and a next-generation communication technology, e.g., a new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the audio signal processing apparatus 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or the power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of the same type as or a different type from the electronic device 101. According to an embodiment, all or some of operations to be executed by the electronic device 101 may be executed at one or more external electronic devices (e.g., the external devices 102 and 104, and the server 108). For example, if the electronic device 101 needs to perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and may transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

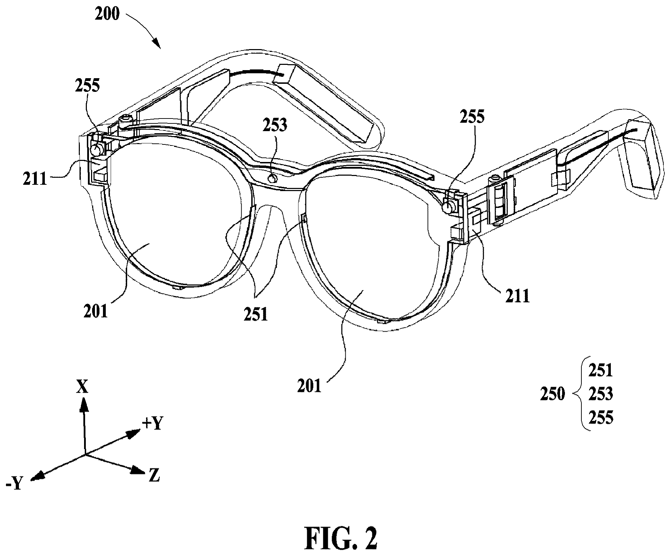

FIG. 2 is a perspective view illustrating an internal configuration of a wearable electronic device 200, according to an embodiment.

Referring to FIG. 2, the wearable electronic device 200 according to an embodiment may include at least one of a light output module 211, a display member 201, and a camera module 250.

According to an embodiment of the disclosure, the light output module 211 may include a light source to output an image and a lens to guide an image to the display member 201. According to an embodiment of the disclosure, the light output module 211 may include at least one of a liquid crystal display (LCD), a digital mirror device (DMD), a liquid crystal on silicon (LCoS), an organic light-emitting diode (OLED), or a micro light-emitting diode (micro LED).

According to an embodiment of the disclosure, the display member 201 may include an optical waveguide (e.g., a waveguide). According to an embodiment of the disclosure, an image output by the light output module 211 incident to one end of the optical waveguide may be propagated inside the optical waveguide and provided to the user. According to an embodiment of the disclosure, the optical waveguide may include at least one diffractive element (e.g., a diffractive optical element (DOE) and a holographic optical element (HOE)) or at least one of reflective elements (e.g., a reflection mirror). For example, the optical waveguide may guide the image output by the light output module 211 to the eyes of the user using the at least one diffractive element or the reflective element.

According to an embodiment of the disclosure, the camera module 250 may capture a still image and/or a moving image. According to an embodiment, the camera module 250 may be disposed within a lens frame and disposed around the display member 201.

According to an embodiment of the disclosure, a first camera module 251 may capture and/or recognize a trajectory of a gaze or eye (e.g., a pupil or an iris) of the user. According to an embodiment of the disclosure, the first camera module 251 may periodically or aperiodically transmit information (e.g., trajectory information) associated with the trajectory of the gaze or eye of the user to a processor (e.g., the processor 120 of FIG. 1).

According to an embodiment of the disclosure, a second camera module 253 may capture an external image.

According to an embodiment of the disclosure, a third camera module 255 may be used for hand detection and tracking and for recognition of a gesture (e.g., a hand gesture) of the user. The third camera module 255 according to an embodiment of the disclosure may be used for three degrees of freedom (3DoF) and six degrees of freedom (6DoF) head tracking, recognition of a position (space and environment), and/or recognition of a movement. The second camera module 253 may also be used for hand detection and tracking and for recognition of a gesture of the user according to an embodiment of the disclosure. According to an embodiment of the disclosure, at least one of the first camera module 251 to the third camera module 255 may be replaced by a sensor module (e.g., a light detection and ranging (LiDAR) sensor). For example, the sensor module may include at least one of a vertical-cavity surface-emitting laser (VCSEL), an infrared sensor, and/or a photodiode.

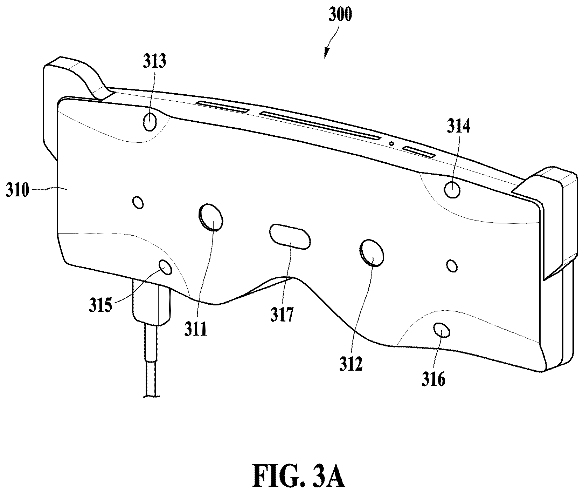

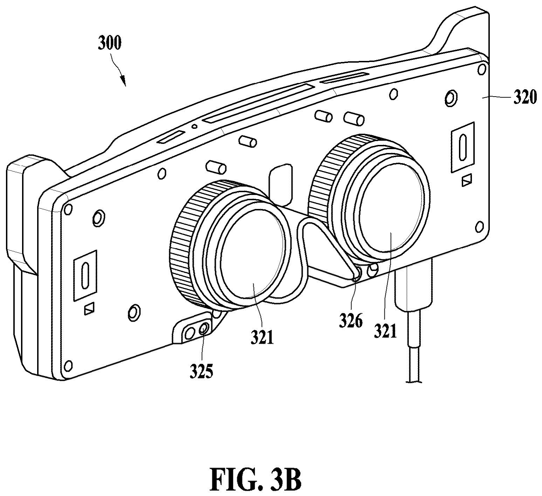

FIGS. 3A and 3B are diagrams illustrating a front surface and a rear surface of a wearable electronic device 300 according to an embodiment.

Referring to FIGS. 3A and 3B, in an embodiment, camera modules 311, 312, 313, 314, 315, and 316 and/or a depth sensor 317 for obtaining information related to a surrounding environment of the wearable electronic device 300 may be disposed on a first surface 310 of a housing.

In an embodiment, the camera modules 311 and 312 may obtain an image related to the surrounding environment of the wearable electronic device.

In an embodiment, the camera modules 313, 314, 315, and 316 may obtain an image in a state in which the wearable electronic device is worn by a user. The camera modules 313, 314, 315, and 316 may be used for hand detection and tracking and for recognition of a gesture (e.g., a hand gesture) of the user. The camera modules 313, 314, 315, and 316 may be used for 3DoF and 6DoF head tracking, recognition of a position (space and environment), and/or recognition of a movement. In an embodiment, the camera modules 311 and 312 may be used for hand detection and tracking and for recognition of a gesture of the user.

In an embodiment, the depth sensor 317 may be configured to transmit a signal and receive a signal reflected from an object and may be used to determine a distance from an object based on a time of flight (TOF). Instead of or in addition to the depth sensor 217, the camera modules 213, 214, 215, and 216 may determine a distance from an object.

According to an embodiment, camera modules 325 and 326 for face recognition and/or a display 321 (and/or a lens) may be disposed on a second surface 320 of the housing.

In an embodiment, the camera modules 325 and 326 for face recognition adjacent to a display may be used to recognize a face of the user or may recognize and/or track both eyes of the user.

In an embodiment, the display 321 (and/or a lens) may be disposed on the second surface 320 of the wearable electronic device 300. In an embodiment, the wearable electronic device 300 may not include the camera modules 315 and 316 among the plurality of camera modules 313, 314, 315, and 316. Although not shown in FIGS. 3A and 3B, the wearable electronic device 300 may further include at least one components among the components shown in FIG. 2.

As described above, the wearable electronic device 300 according to an embodiment may have a form factor to be worn on a head of a user. The wearable electronic device 300 may further include a wearing member and/or a strap to be fixed onto a body part of the user. The wearable electronic device 300 in a state of being worn on the head of the user may provide a user experience based on an augmented reality (AR), a virtual reality (VR), and/or a mixed reality (MR).

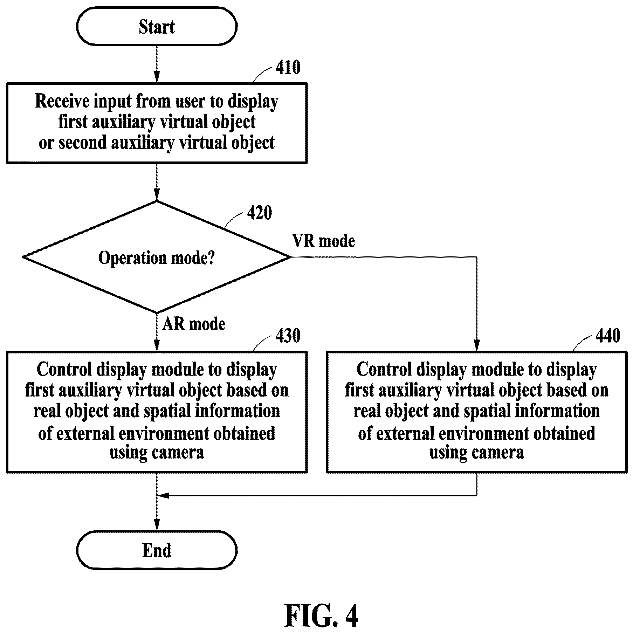

FIG. 4 is a flowchart of operations of a display module control method according to various embodiments.

In the following embodiments, operations may be performed sequentially but not necessarily. For example, the order of the operations may change, and at least two of the operations may be performed in parallel.

According to an embodiment, operations 410 to 440 may be construed as being performed by a processor (e.g., the processor 120 of FIG. 1) of an electronic device (e.g., the electronic device 101 of FIG. 1, the wearable electronic device 200 of FIG. 2, and the wearable electronic device 300 of FIG. 3).

For example, in operation 410, the electronic device 101 may receive an input from a user to display a first auxiliary virtual object or a second auxiliary virtual object. For example, the first auxiliary virtual object may represent a virtual object corresponding to an AI assistant when the AI assistant (or an application related to the AI assistant) is executed in an AR mode. For example, the second auxiliary virtual object may represent a virtual object corresponding to an AI assistant when the AI assistant (or an application related to the AI assistant) is executed in a VR mode.

For example, the AR mode may represent an operation mode that displays a virtual object in a real environment obtained from a camera (e.g., the camera module 160 of FIG. 1 or the camera module 250 of FIG. 2) and provides the virtual object through the display module 160. For example, the VR mode may represent an operation mode that displays a virtual object in a virtual environment and provides the virtual object through the display module 160.

For example, in operation 420, the electronic device 101 may determine the operation mode of the electronic device 101.

For example, when the operation mode of the electronic device 101 is determined as the AR mode in operation 420, the electronic device 101 may control a display module (e.g., the display module 160 of FIG. 1 or the light output module 211 of FIG. 2) to display the first auxiliary virtual object based on a real object and spatial information of an external environment obtained using the camera 180 or 250 in operation 430.

For example, the electronic device 101 may obtain the real object and the spatial information based on an image of the external environment obtained using the camera. The electronic device 101 may determine a shape and a position of the first auxiliary virtual object based on the real object and the spatial information. The electronic device 101 may control the display module 160 or 211 to display the first auxiliary virtual object according to the shape and the position of the first auxiliary virtual object.

For example, the electronic device 101 may capture the external environment using the camera 180 or 250. The electronic device 101 may analyze the captured external environment and identify a real object included in the external environment. The electronic device 101 may analyze the captured external environment and generate spatial information. Spatial information may include information about whether the external environment is indoors or outdoors, information about a location of the external environment (e.g., a room, a living room, or a street), and information about the external environment such as brightness of the external environment.

The electronic device 101 may display the first auxiliary virtual object based on the real object and the spatial information.

For example, the electronic device 101 may display the first auxiliary virtual object in an area of the display module 160 that does not overlap an area of the display module 160 displaying the real object. For example, the electronic device 101 may display the first auxiliary virtual object in an area of the display module 160 that is adjacent to an area of the display module 160 displaying the real object. The display area adjacent to the area of the display module 160 displaying the real object may indicate an area of the display module 160 spaced apart by a set distance and direction based on the position of the real object.

For example, the electronic device 101 may display the first auxiliary virtual object in an area of the display module 160 that does not overlap an area where a light source is positioned in the external environment, based on the spatial information. For example, the electronic device 101 may display the first auxiliary virtual object so that the user recognizes that the first auxiliary virtual object is standing on the floor of the external environment based on the spatial information.

For example, the electronic device 101 may determine a visual attribute of the first auxiliary virtual object, such as a size, a shape, and a color of the first auxiliary virtual object based on the spatial information. The electronic device 101 may determine the visual attribute of the first auxiliary virtual object so that the user may recognize the first auxiliary virtual object based on the spatial information.

For example, the visual attribute of the first auxiliary virtual object may be set based on the spatial information. The electronic device 101 may analyze the spatial information of the external environment captured using the camera, and determine the visual attribute based on the analyzed spatial information.

For example, the electronic device 101 may control the display module 160 to provide a result of processing a first voice command input from the user using the first auxiliary virtual object in the AR mode. For example, the electronic device 101 may provide the result of processing the first voice command to the user as a text or an image through the first auxiliary virtual object. A method of providing the result of processing the first voice command is not limited to the above example, and the electronic device 101 may provide the result of processing the first voice command to the user through various methods (e.g., a voice or audio output through a sound output module (e.g., the sound output module 155 of FIG. 1)).

For example, when the operation mode of the electronic device 101 is determined as the VR mode in operation 420, the electronic device 101 may control the display module 160 to display a second auxiliary virtual object based on an attribute of the virtual environment and the virtual object in operation 440.

For example, the electronic device 101 may determine a visual attribute of the second auxiliary virtual object, such as a size, a shape, and a color of the second auxiliary virtual object based on the attribute of the virtual environment. For example, the visual attribute of the second auxiliary virtual object may be set according to the attribute of the virtual environment. The electronic device 101 may determine the visual attribute of the second auxiliary virtual object so that the user may recognize the second auxiliary virtual object according to the attribute of the virtual environment.

For example, the electronic device 101 may control the display module 160 to display the second auxiliary virtual object based on the virtual object. The electronic device 101 may display the second auxiliary virtual object in an area of the display module 160 that does not overlap an area of the display module 160 displaying the virtual object.

For example, the electronic device 101 may display the second auxiliary virtual object in an area of the display module 160 that is adjacent to an area of the display module 160 displaying the virtual object. The display area adjacent to the area of the display module 160 displaying the virtual object may indicate an area of the display module 160 spaced apart by a set distance and direction based on the position of the virtual object.

For example, the electronic device 101 may control the display module 160 to provide a result of processing a second voice command input from the user using the second auxiliary virtual object in the VR mode.

A method of providing the result of processing the second voice command is not limited to the above example, and the electronic device 101 may provide the result of processing the second voice command to the user through various methods (e.g., a voice or audio output through the sound output module 155 of FIG. 1).

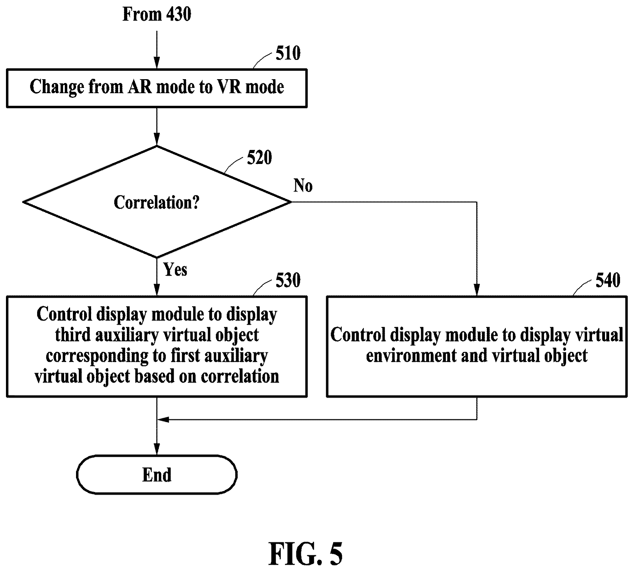

FIG. 5 is a flowchart illustrating operations of an electronic device (e.g., the electronic device 101 of FIG. 1, the wearable electronic device 200 of FIG. 2, or the wearable electronic device 300 of FIG. 3) controlling the display module 160 based on a correlation according to various embodiments.

In the following embodiments, operations may be performed sequentially but not necessarily. For example, the order of the operations may change, and at least two of the operations may be performed in parallel.

According to an embodiment, it may be understood that operations 510 to 540 may be performed by a processor (e.g., the processor 120 of FIG. 1) of the electronic device 101.

For example, after operation 430 of FIG. 4, the electronic device 101 may change the operation mode from the AR mode to the VR mode in operation 510.

For example, the electronic device 101 may determine a correlation between the AR mode and the VR mode in operation 520.

For example, the electronic device 101 may determine the correlation based on whether the virtual object includes a virtual object corresponding to the real object. The electronic device 101 may determine the correlation based on whether the virtual environment corresponds to the spatial information. The electronic device 101 may determine the correlation based on whether the virtual environment corresponds to information on the first auxiliary virtual object. The electronic device 101 may determine the correlation based on whether the virtual environment is determined by an application for the first auxiliary virtual object. The electronic device 101 may determine the correlation based on whether an application being executed in the AR mode corresponds to an application being executed in the VR mode.

For example, when it is determined that there is a correlation between the AR mode and the VR mode in operation 520, the electronic device 101 may control a display module (e.g., the display module 160 of FIG. 1 or the light output module 211 of FIG. 2) to display a third auxiliary virtual object corresponding to the first auxiliary virtual object based on the correlation in operation 530.

For example, the electronic device 101 may determine a shape and a position of the third auxiliary virtual object corresponding to the first auxiliary virtual object in the VR mode based on the correlation. The electronic device may control the display module 160 or 211 to display the third auxiliary virtual object in the virtual environment based on the shape and the position of the third auxiliary virtual object.

For example, the third auxiliary virtual object may represent a virtual object corresponding to an AI assistant when the AI assistant (or an application related to the AI assistant) is executed in the VR mode. Even if an input for executing the AI assistant is not received from the user in the VR mode, the electronic device 101 may execute the AI assistant and control the display module 160 to display the third auxiliary virtual object.

For example, when it is determined that there is no correlation between the AR mode and the VR mode in operation 520, the electronic device 101 may control the display module 160 to display the virtual environment and the virtual object in operation 540.

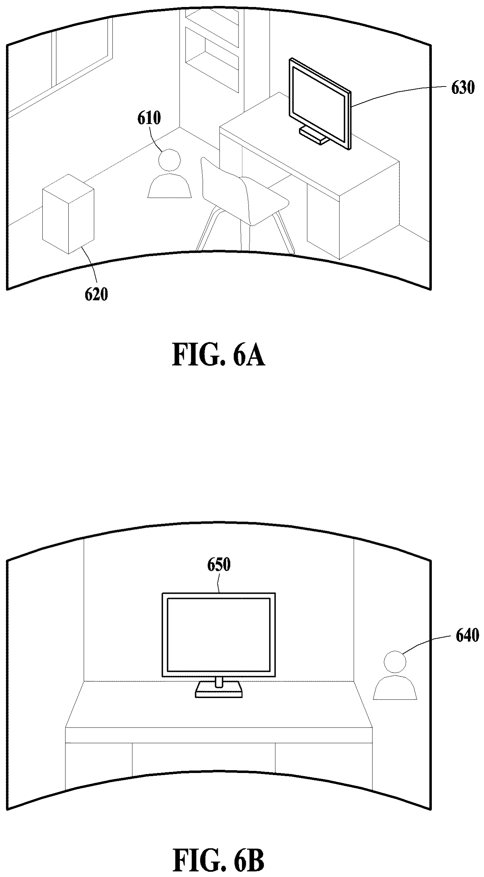

FIGS. 6A and 6B are diagrams illustrating an operation of an electronic device (e.g., the electronic device 101 of FIG. 1, the wearable electronic device 200 of FIG. 2, or the wearable electronic device 300 of FIG. 3) displaying a third auxiliary virtual object 640 according to various embodiments.

Referring to FIGS. 6A and 6B, the electronic device 101 according to an embodiment may determine the correlation based on whether a virtual object 650 includes a virtual object corresponding to a real object 630.

FIG. 6A is an example in which the electronic device 101 displays a first auxiliary virtual object 610, a virtual object 620, and the real object 630 on the display module 160 in the AR mode.

When the operation mode of the electronic device 101 is switched from the AR mode to the VR mode, the electronic device 101 may determine the correlation based on whether the virtual object 650 includes the virtual object 650 corresponding to the real object 630. In FIGS. 6A and 6B, the virtual object 650 may be the virtual object 650 corresponding to the real object 630. The electronic device 101 may determine that there is a correlation between the AR mode and the VR mode when the virtual object 650 displayed in the VR mode includes the virtual object 650 corresponding to the real object 630.

When it is determined that there is a correlation between the AR mode and the VR mode, as shown in FIG. 6B, the electronic device 101 may control the display module 160 to display the third auxiliary virtual object 640 corresponding to the first auxiliary virtual object 610.

For example, the electronic device 101 may determine a position where the third auxiliary virtual object 640 is displayed, based on a position of the virtual object 650 corresponding to the real object 630. As shown in FIG. 6B, the electronic device 101 may display the third auxiliary virtual object 640 in an area of the display module 160 that does not overlap an area of the display module 160 displaying the virtual object 650 corresponding to the real object 630.

In FIGS. 6A and 6B, the operations of the electronic device 101 according to the correlation between the AR mode and the VR mode when the operation mode is switched from the AR mode to the VR mode have been described above, and the description provided with reference to FIGS. 6A and 6B may be applied substantially in the same manner when the operation mode is switched from the VR mode to the AR mode.

For example, when the operation mode is changed from the VR mode of FIG. 6B to the AR mode of FIG. 6A, the electronic device 101 may determine the correlation between the VR mode and the AR mode based on whether the real object 630 includes the real object 630 corresponding to the virtual object 650.

When the real object 630 includes the real object 630 corresponding to the virtual object 650, the electronic device 101 may determine that there is a correlation between the VR mode and the AR mode. The electronic device 101 may determine a position of a fourth auxiliary virtual object corresponding to the second auxiliary virtual object based on the position of the real object 630 corresponding to the virtual object 650.

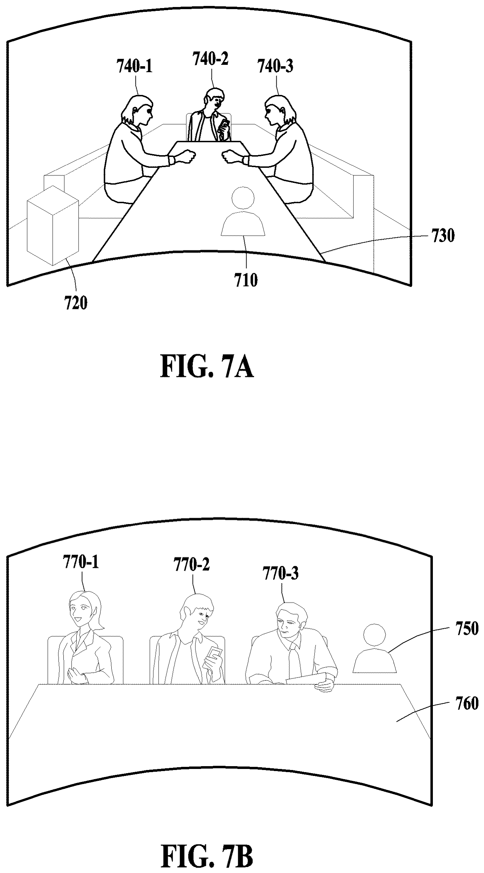

FIGS. 7A and 7B are diagrams illustrating an operation of an electronic device (e.g., the electronic device 101 of FIG. 1, the wearable electronic device 200 of FIG. 2, or the wearable electronic device 300 of FIG. 3) displaying a third auxiliary virtual object according to various embodiments.

Referring to FIGS. 7A and 7B, the electronic device 101 according to an embodiment may determine the correlation based on whether a virtual environment corresponds to spatial information.

FIG. 7A is an example in which the electronic device 101 displays a first auxiliary virtual object 710, a virtual object 720, a real object 730, and participants 740-1, 740-2, and 740-3 on a display module (e.g., the display module 160 of FIG. 1 or the light output module 211 of FIG. 2) in the AR mode.

When the operation mode of the electronic device 101 is switched from the AR mode to the VR mode, the electronic device 101 may determine the correlation based on whether the virtual environment corresponds to the spatial information. In FIG. 7A, the electronic device 101 may analyze an external environment to determine that the external environment is the inside of a conference room and a user and the participants 740-1, 740-2, and 740-3 are having a meeting.

In FIG. 7A, when the operation mode of the electronic device 101 is switched to the VR mode, the electronic device 101 may determine a virtual environment corresponding to the spatial information of FIG. 7A. The electronic device 101 may determine the virtual environment as a conference room in response to the spatial information of FIG. 7A.

For example, as shown in FIG. 7B, the electronic device 101 may control the display module 160 to display virtual objects 770-1, 770-2, and 770-3 corresponding to the participants 740-1, 740-2, and 740-3, and a virtual object 760 corresponding to the spatial information and the real object 730.

The electronic device 101 may determine that there is a correlation between the AR mode and the VR mode when the virtual environment (e.g., a conference room) of FIG. 7B corresponds to the spatial information (e.g., a conference room) in the AR mode of FIG. 7A.

When it is determined that there is a correlation between the AR mode and the VR mode, as shown in FIG. 7B, the electronic device 101 may control the display module 160 to display a third auxiliary virtual object 750 corresponding to the first auxiliary virtual object 710.

For example, the electronic device 101 may determine the position where the third auxiliary virtual object 750 is displayed in the virtual environment, based on the position where the first auxiliary virtual object 710 is displayed in the spatial information.

In FIG. 7A, the electronic device 101 may determine the position of the first auxiliary virtual object 710 based on the spatial information. For example, in FIG. 7A, the electronic device 101 may determine the position of the first auxiliary virtual object 710 so that the first auxiliary virtual object 710 may be recognized as a participant in the meeting. In FIG. 7B, the electronic device 101 may determine the position of the third auxiliary virtual object 750 in the virtual environment so that the third auxiliary virtual object 750 may be recognized as a participant in the meeting.

For example, in FIG. 7A, the first auxiliary virtual object 710 may be displayed on the real object 730. In FIG. 7B, the electronic device 101 may determine the position of the third auxiliary virtual object 750 based on the position of the virtual object 760 corresponding to the real object 730. As shown in FIG. 7B, the electronic device 101 may determine the position of the third auxiliary virtual object 750 as an upper end of the virtual object 760.

In FIGS. 7A and 7B, the operations of the electronic device 101 according to the correlation between the AR mode and the VR mode when the operation mode is switched from the AR mode to the VR mode have been described above, and the description provided with reference to FIGS. 7A and 7B may be applied substantially in the same manner when the operation mode is switched from the VR mode to the AR mode.

For example, when the operation mode is changed from the VR mode of FIG. 7B to the AR mode of FIG. 7A, the electronic device 101 may determine the correlation between the VR mode and the AR mode based on whether the spatial information of the external environment corresponds to the virtual environment.

When the spatial information of the external environment (e.g., a conference room) corresponds to the virtual environment (e.g., a conference room), the electronic device 101 may determine that there is a correlation between the VR mode and the AR mode. The electronic device 101 may determine the position of the fourth auxiliary virtual object corresponding to the second auxiliary virtual object based on the position where the second auxiliary virtual object is displayed in the virtual environment.

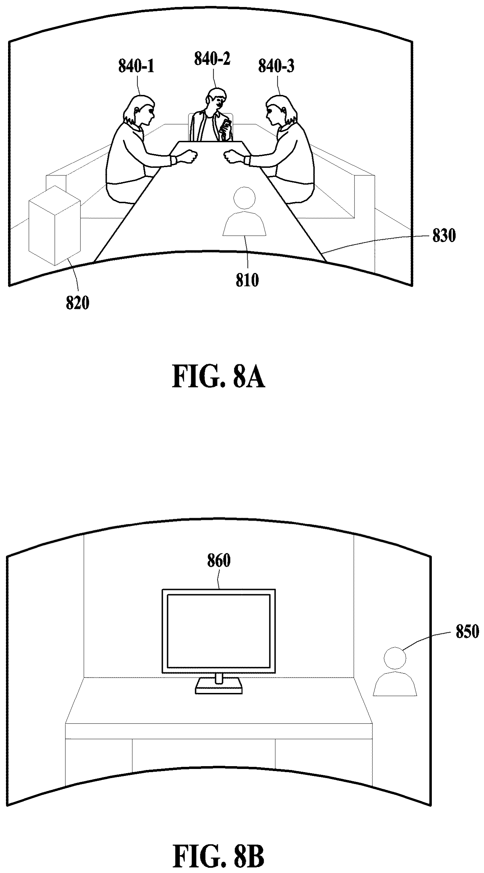

FIGS. 8A and 8B are diagrams illustrating an operation of an electronic device (e.g., the electronic device 101 of FIG. 1, the wearable electronic device 200 of FIG. 2, or the wearable electronic device 300 of FIG. 3) displaying a third auxiliary virtual object 850 according to various embodiments.

Referring to FIGS. 8A and 8B, the electronic device 101 according to an embodiment may determine the correlation based on whether the virtual environment corresponds to information on a first auxiliary virtual object 810. For example, the electronic device may determine the correlation based on whether the virtual environment corresponds to at least one of an execution time and an operation history of the first auxiliary virtual object.

FIG. 8A is an example in which the electronic device 101 displays the first auxiliary virtual object 810, virtual objects 820 and 830, and participants 840-1, 840-2, and 840-3 on the display module 160 in the AR mode when the user is having a meeting with the participants 840-1, 840-2, and 840-3. The electronic device 101 may control an application (e.g., an AI assistant) related to the first auxiliary virtual object 810 to perform meeting-related activities (e.g., recording a meeting, and summarizing/organizing meeting contents).

When the operation mode is switched from the AR mode to the VR mode, the electronic device 101 may determine the correlation based on whether the virtual environment corresponds to the information on the first auxiliary virtual object 810.

For example, FIG. 8B is an example in which the operation mode is switched to the VR mode to organize the meeting contents after finishing the meeting in FIG. 8A. The electronic device 101 may determine whether the virtual environment corresponds to information on the first auxiliary virtual object 810 (e.g., meeting recording data, meeting content summary/organization data).

In FIG. 8B, the electronic device 101 may execute an application for organizing meeting contents in the VR mode, and control the display module 160 to display a virtual object 860. The electronic device 101 may determine that a virtual environment for organizing the meeting content corresponds to the information on the first auxiliary virtual object 810, and determine that there is a correlation between the VR mode and the AR mode.

When it is determined that there is a correlation between the AR mode and the VR mode, the electronic device 101 may control the display module 160 to display the third auxiliary virtual object 850. The electronic device 101 may determine a position of the third auxiliary virtual object 850 based on a position of the virtual object 860 in the virtual environment. For example, the electronic device 101 may determine an area of the display module 160 that does not overlap an area of the display module 160 displaying the virtual object 860 as the position of the third auxiliary virtual object 850.

For example, the electronic device 101 may determine the correlation based on whether an application (e.g., an AR office application) executed in the AR mode corresponds to an application (e.g., a VR office application) executed in the VR mode. For example, when the application executed in AR mode is executed in the VR mode, the electronic device 101 may determine that there is a correlation between the AR mode and the VR mode.

For example, when a first application set in the AR mode is executed and a second application set in the VR mode is executed, the electronic device 101 may determine that there is a correlation between the AR mode and the VR mode. For example, when an application for a meeting is executed in the AR mode and an application for document generation is executed in the VR mode, the electronic device 101 may determine that there is a correlation between the AR mode and the VR mode.

In FIGS. 8A and 8B, the operations of the electronic device 101 according to the correlation between the AR mode and the VR mode when the operation mode is switched from the AR mode to the VR mode have been described above, and the description provided with reference to FIGS. 8A and 8B may be applied substantially in the same manner when the operation mode is switched from the VR mode to the AR mode.

For example, when the operation mode is changed from the VR mode of FIG. 8B to the AR mode of FIG. 8A, the electronic device 101 may determine the correlation between the VR mode and the AR mode based on whether the spatial information of the external environment corresponds information on the second auxiliary virtual object.

When the spatial information (e.g., an office) of the external environment corresponds to information on the second auxiliary virtual object (e.g., meeting recording data, meeting content summary/organization data), the electronic device 101 may determine that there is a correlation between the VR mode and the AR mode. The electronic device 101 may determine a position of a fourth auxiliary virtual object corresponding to the second auxiliary virtual object based on the spatial information.

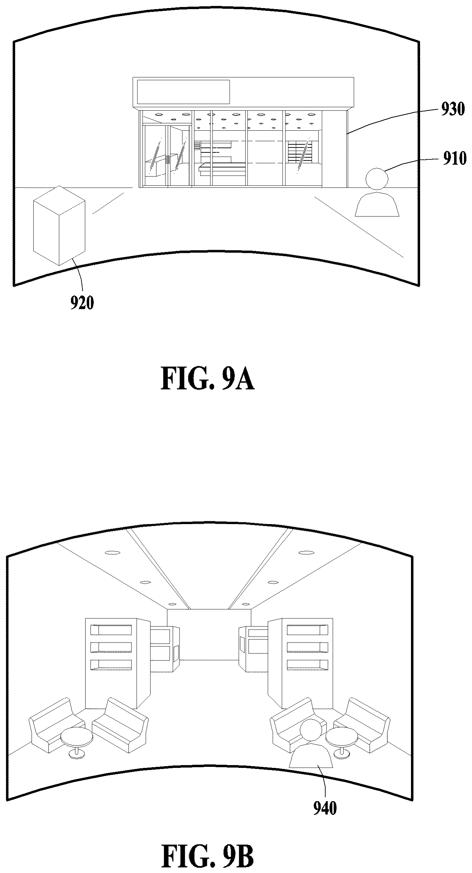

FIGS. 9A and 9B are diagrams illustrating an operation of an electronic device (e.g., the electronic device 101 of FIG. 1, the wearable electronic device 200 of FIG. 2, or the wearable electronic device 300 of FIG. 3) displaying a third auxiliary virtual object according to various embodiments.

Referring to FIGS. 9A and 9B, the electronic device 101 according to an embodiment may determine the correlation based on whether a virtual environment is determined by an application for a first auxiliary virtual object 910.

FIG. 9A illustrates an example in which the electronic device 101 displays the first auxiliary virtual object 910, a virtual object 920, and a real object 930 on the display module 160 in the AR mode when the user is on the street.

In FIG. 9A, the user may cause the electronic device 101 to display an interior of the real object 930 through the display module 160 in the VR mode through a voice command.

FIG. 9B is a diagram illustrating an example in which the electronic device 101 displays the interior of the real object 930 through the display module 160 in the VR mode. The virtual environment of FIG. 9B may be determined by the application for the first auxiliary virtual object 910 of FIG. 9A. The application (e.g., a voice assistant) for the first auxiliary virtual object 910 may determine the virtual environment such as that in FIG. 9B based on the voice command of the user.

For example, the electronic device 101 may determine the correlation between the real object 930 of FIG. 9A and the virtual environment of FIG. 9B. The virtual environment of FIG. 9B relates to the interior of the real object 930, and the electronic device 101 may determine that there is a correlation between the virtual environment and the real object 930.

In addition to displaying the interior of the real object 930 as a virtual environment as in FIGS. 9A and 9B, even when displaying an exterior of the real object 930 or displaying an environment related to the real object 930 as a virtual environment, the electronic device 101 may determine that there is a correlation between the real object 930 and the virtual environment.

For example, when the electronic device 101 receives a voice input requesting to display the interior of the real object 930 from the user, the electronic device 101 may process the voice command of the user using an application related to the first auxiliary virtual object 910. The electronic device 101 may cause the display module 160 to display the interior of the real object 930 as the virtual environment based on a result of processing the voice command.

For example, an application for the first auxiliary virtual object 910 may execute another application (e.g., a map application) to display the interior of the real object 930 as the virtual environment. The electronic device 101 may determine that there is a correlation between the AR mode and the VR mode when the virtual environment in the VR mode is determined by the application for the first auxiliary virtual object 910.

When it is determined that there is a correlation between the AR mode and the VR mode, the electronic device 101 may control the display module 160 to display a third auxiliary virtual object 940.

For example, the electronic device 101 may determine a position where the third auxiliary virtual object 940 is displayed and a shape of the third auxiliary virtual object 940 based on the virtual environment. In FIG. 9B, the electronic device 101 may determine the position of the third auxiliary virtual object 940 for guiding the virtual environment, and determine the shape (e.g., a human shape) of the third auxiliary virtual object 940.

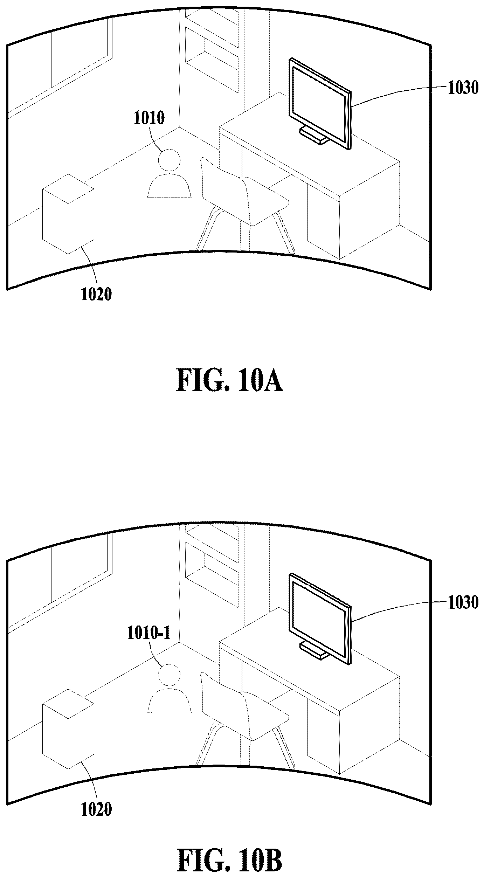

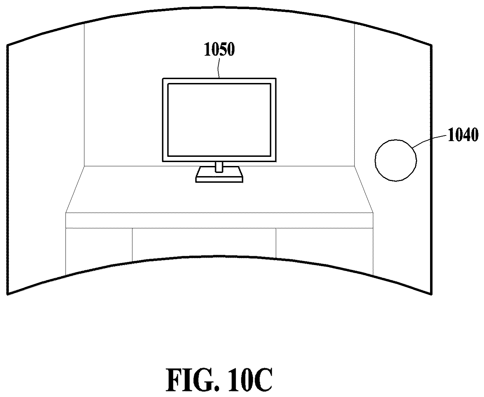

FIGS. 10A, 10B, and 10C are diagrams illustrating an operation of an electronic device (e.g., the electronic device 101 of FIG. 1, the wearable electronic device 200 of FIG. 2, or the wearable electronic device 300 of FIG. 3) controlling a visual attribute of first auxiliary virtual objects 1010 and 1010-1 and/or a second auxiliary virtual object 1040 according to various embodiments.

Referring to FIGS. 10A and 10B, the electronic device 101 according to an embodiment may determine a position of the first auxiliary virtual object 1010 in the AR mode based on a position of a real object, and brightness of the external environment and a position of a light source included in the spatial information.

FIG. 10A is an example in which the electronic device 101 displays the first auxiliary virtual object 1010, a virtual object 1020, and a real object 1030 on the display module 160 in the AR mode.

For example, the electronic device 101 may display the first auxiliary virtual object 1010 in an area of the display module 160 that does not overlap the position of the real object 1030 in the AR mode.

For example, the electronic device 101 may display the first auxiliary virtual object 1010 in an area of the display module 160 that may ensure visibility of the first auxiliary virtual object 1010 based on the brightness of the external environment included in the spatial information. For example, the electronic device 101 may display the first auxiliary virtual object 1010 in an area of the display module 160 where the brightness of the external environment is within a set range.

For example, the electronic device 101 may determine the position of the first auxiliary virtual object 1010 based on the position of the light source. The electronic device 101 may display the first auxiliary virtual object 1010 in an area of the display module 160 spaced apart from the position of the light source by a set distance or more.

Referring to FIG. 10B, the electronic device 101 may control the visual attribute of the first auxiliary virtual object 1010-1. For example, when an application for the first auxiliary virtual object 1010-1 is executed and the application does not perform an action, the electronic device 101 may display the first auxiliary virtual object 1010-1 transparently in the area of the display module 160 as shown in FIG. 10B, or may not display the first auxiliary virtual object 1010-1 on the display module 160. The electronic device 101 may cause the user not to recognize the first auxiliary virtual object 1010-1 when the application for the first auxiliary virtual object 1010-1 does not perform an action.

For example, the electronic device 101 may determine the transparency of the first auxiliary virtual object 1010-1. The electronic device 101 may determine the shape of the first auxiliary virtual objects 1010 and 1010-1 in FIGS. 10A and 10B. For example, the electronic device 101 may determine the shape of the first auxiliary virtual objects 1010 and 1010-1 using a real object and spatial information in the AR mode.

The electronic device 101 may control the display module 160 to display a second auxiliary virtual object in the VR mode in substantially the same manner as the case in which the electronic device 101 controls the display module 160 to display the first auxiliary virtual objects 1010 and 1010-1 in the AR mode of FIGS. 10A and 10B.

The electronic device 101 may determine a position of the second auxiliary virtual object based on an attribute of the virtual environment and a position of a virtual object in the VR mode. For example, the electronic device 101 may control the display module 160 to display the second auxiliary virtual object in an area that does not overlap an area of the display module 160 displaying the virtual object.

For example, the electronic device 101 may determine the position of the second auxiliary virtual object based on the attribute of the virtual environment. For example, the electronic device 101 may determine the position of the second auxiliary virtual object in an area where the brightness is within a set range in the virtual environment.

Referring to FIGS. 10A, 10B, and 10C, the electronic device 101 according to an embodiment may determine a shape of the second auxiliary virtual object 1040 based on the virtual environment. For example, when the operation mode of the electronic device 101 is changed from the AR mode of FIG. 10A or 10B to the VR mode, the electronic device 101 may control the display module 160 to display a virtual object 1050 and the second auxiliary virtual object 1040 as in FIG. 10C.

For example, the electronic device 101 may determine the shape of the second auxiliary virtual object 1040 according to the theme or content of the virtual environment. For example, as shown in FIG. 10C, the electronic device 101 may determine the shape of the second auxiliary virtual object 1040 corresponding to the first auxiliary virtual objects 1010 and 1010-1 as a circle. For example, the electronic device 101 may determine the shape of the second auxiliary virtual object 1040 based on the theme, content, and/or the virtual object 1050 of the virtual environment of FIG. 10C.

For example, when the electronic device 101 controls the display module 160 to display a virtual environment different from that of FIG. 10C, the electronic device 101 may change the shape of the second auxiliary virtual object 1040 based on theme, content, and/or a virtual object of the virtual environment that to be changed.

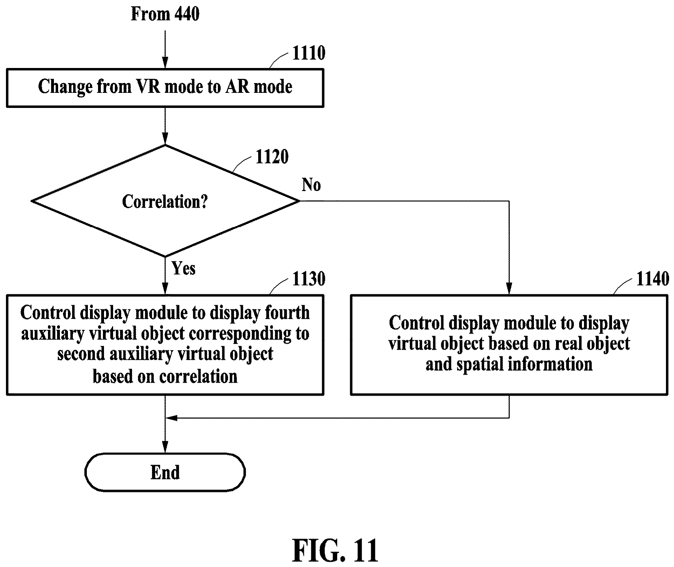

FIG. 11 is a flowchart illustrating operations of an electronic device (e.g., the electronic device 101 of FIG. 1, the wearable electronic device 200 of FIG. 2, or the wearable electronic device 300 of FIG. 3) controlling the display module 160 based on a correlation according to various embodiments.

In the following embodiments, operations may be performed sequentially but not necessarily. For example, the order of the operations may change, and at least two of the operations may be performed in parallel.

According to an embodiment, it may be understood that operations 1110 to 1140 may be performed by a processor (e.g., the processor 120 of FIG. 1) of the electronic device 101.

For example, the electronic device 101 may change the operation mode from the VR mode to the AR mode in operation 1110 after operation 440 of FIG. 4.

For example, the electronic device 101 may determine a correlation between the VR mode and the AR mode in operation 1120. For example, the electronic device 101 may determine the correlation based on whether the real object includes a real object corresponding to the virtual object. The electronic device 101 may determine the correlation based on whether the spatial information of the external environment corresponds to the spatial information. The electronic device 101 may determine the correlation based on whether the spatial information of the external environment corresponds to information on the second auxiliary virtual object. The electronic device 101 may determine the correlation based on whether an application being executed in the VR mode corresponds to an application being executed in the AR mode.

For example, when it is determined that there is a correlation between the VR mode and the AR mode in operation 1120, the electronic device 101 may control the display module 160 to display a fourth auxiliary virtual object corresponding to the second auxiliary virtual object based on the correlation in operation 1130.

For example, when it is determined that there is no correlation between the VR mode and the AR mode in operation 1120, the electronic device 101 may control the display module 160 to display the virtual object based on the real object and the spatial information in operation 1140.

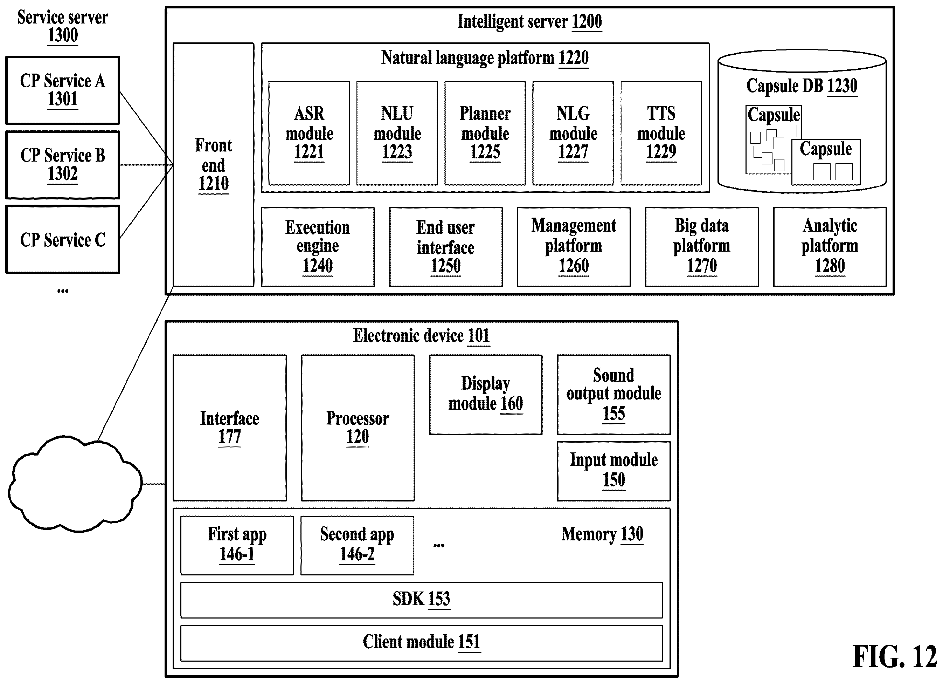

FIG. 12 is a block diagram illustrating an integrated intelligence system according to an embodiment.

Referring to FIG. 12, an integrated intelligence system of an embodiment may include the electronic device 101, an intelligent server 1200, and a service server 1300.

The electronic device 101 may be a terminal device (or an electronic device) connectable to the Internet, and may be, for example, a mobile phone, a smartphone, a personal digital assistant (PDA), a notebook computer, a TV, a white home appliance, a wearable device, a head-mounted display (HMD), or a smart speaker.

According to the illustrated embodiment, the electronic device 101 may include the interface 177, the input module 150, the sound output module 155, the display module 160, the memory 130, or the processor 120. The components listed above may be operationally or electrically connected to one another.

The interface 177 may be connected to an external device and configured to transmit and receive data to and from the external device. The input module 150 may receive a sound (e.g., a user utterance) and convert the sound into an electrical signal. The sound output module 155 of an embodiment may output an electrical signal as a sound (e.g., a voice). The display module 160 of an embodiment may be configured to display an image or video. The display module 160 according to an embodiment may also display a graphical user interface (GUI) of an app (or an application program) being executed.

The memory 130 may store a client module 151, a software development kit (SDK) 153, and a plurality of apps 146. The client module 151 and the SDK 153 may configure a framework (or a solution program) for performing general-purpose functions. In addition, the client module 151 or the SDK 153 may configure a framework for processing a voice input.

The plurality of apps 146 stored in the memory 130 may be programs for performing designated functions. The plurality of apps 146 may include a first app 146-1 and a second app 146-2. Each of the plurality of apps 146 may include a plurality of actions for performing a designated function. For example, the apps may include an alarm app, a messaging app, and/or a scheduling app. The plurality of apps 146 may be executed by the processor 120 to sequentially execute at least a portion of the plurality of actions.

The processor 120 may control the overall operation of the electronic device 101. For example, the processor 120 may be electrically connected to the interface 177, the input module 150, the sound output module 155, and the display module 160 to perform a designated operation.

The processor 120 may also perform the designated function by executing the program stored in the memory 130. For example, the processor 120 may execute at least one of the client module 151 or the SDK 153 to perform the following operation for processing a voice input. The processor 120 may control the operation of the plurality of apps 146 through, for example, the SDK 153. The following operation which is the operation of the client module 151 or the SDK 153 may be performed by the processor 120.

The client module 151 may receive a voice input. For example, the client module 151 may receive a voice signal corresponding to a user utterance sensed through the input module 150. The client module 151 may transmit the received voice input to the intelligent server 200. The client module 151 may transmit state information of the electronic device 101 together with the received voice input to the intelligent server 200. The state information may be, for example, execution state information of an app.

The client module 151 may receive a result corresponding to the received voice input. For example, when the intelligent server 200 is capable of calculating a result corresponding to the received voice input, the client module 151 may receive the result corresponding to the received voice input. The client module 151 may display the received result on the display module 160.

The client module 151 may receive a plan corresponding to the received voice input. The client module 151 may display results of executing a plurality of actions of an app according to the plan on the display module 160. The client module 151 may, for example, sequentially display the results of executing the plurality of actions on the display. As another example, the electronic device 101 may display only a partial result of executing the plurality of actions (e.g., a result of the last action) on the display.

According to an embodiment, the client module 151 may receive a request to obtain information necessary to calculate the result corresponding to the voice input from the intelligent server 1200. According to an embodiment, the client module 151 may transmit the necessary information to the intelligent server 1200 in response to the request.

The client module 151 may transmit information on the results of executing the plurality of actions according to the plan to the intelligent server 1200. The intelligent server 1200 may confirm that the received voice input has been correctly processed using the information on the results.

The client module 151 may include a speech recognition module. According to an embodiment, the client module 151 may recognize a voice input for performing a limited function through the speech recognition module. For example, the client module 151 may execute an intelligent app for processing a voice input to perform an organic operation through a designated input (e.g., Wake up!).

The intelligent server 1200 may receive information related to a user voice input from the electronic device 101 through a communication network. According to an embodiment, the intelligent server 200 may change data related to the received voice input into text data. According to an embodiment, the intelligent server 200 may generate a plan for performing a task corresponding to the user voice input based on the text data.

According to an embodiment, the plan may be generated by an AI system. The AI system may be a rule-based system or a neural network-based system (e.g., a feedforward neural network (FNN) or a recurrent neural network (RNN)). Alternatively, the AI system may be a combination of the above-described systems or other AI systems. According to an embodiment, the plan may be selected from a set of predefined plans or may be generated in real time in response to a user request. For example, the AI system may select at least one plan from among the predefined plans.

The intelligent server 1200 may transmit a result according to the generated plan to the electronic device 101 or transmit the generated plan to the electronic device 101. According to an embodiment, the electronic device 101 may display the result according to the plan on the display. According to an embodiment, the electronic device 101 may display a result of executing an action according to the plan on the display.

The intelligent server 1200 may include a front end 1210, a natural language platform 1220, a capsule database (DB) 1230, an execution engine 1240, an end user interface 1250, a management platform 1260, a big data platform 1270, or an analytic platform 1280.

The front end 1210 may receive the received voice input from the electronic device 101. The front end 1210 may transmit a response to the voice input.

According to an embodiment, the natural language platform 1220 may include an automatic speech recognition (ASR) module 1221, a natural language understanding (NLU) module 1223, a planner module 1225, a natural language generator (NLG) module 1227, or a text-to-speech (TTS) module 1229.

The ASR module 1221 may convert the voice input received from the electronic device 101 into text data. The NLU module 1223 may discern a user intent using the text data of the voice input. For example, the NLU module 1223 may discern the intent of the user by performing syntactic analysis or semantic analysis. The NLU module 1223 according to an embodiment may discern the meaning of a word extracted from the voice input using a linguistic feature (e.g., a grammatical element) of a morpheme or a phrase, and may determine the intent of the user by matching the discerned meaning of the word to an intent.

The planner module 1225 may generate a plan using a parameter and the intent determined by the NLU module 1223. According to an embodiment, the planner module 1225 may determine a plurality of domains required to perform a task based on the determined intent. The planner module 1225 may determine a plurality of actions included in each of the plurality of domains determined based on the intent. According to an embodiment, the planner module 1225 may determine a parameter required to execute the determined plurality of actions or a result value output by the execution of the plurality of actions. The parameter and the result value may be defined as a concept of a designated form (or class). Accordingly, the plan may include a plurality of actions and a plurality of concepts determined by the user intent. The planner module 1225 may determine a relationship between the plurality of actions and the plurality of concepts stepwise (or hierarchically). For example, the planner module 1225 may determine an execution order of the plurality of actions determined based on the user intent, based on the plurality of concepts. In other words, the planner module 1225 may determine the execution order of the plurality of actions based on the parameter required for the execution of the plurality of actions and results output by the execution of the plurality of actions. Accordingly, the planner module 1225 may generate a plan including connection information (e.g., ontology) on connections between the plurality of actions and the plurality of concepts. The planner module 1225 may generate the plan using information stored in the capsule DB 230 that stores a set of relationships between concepts and actions.

The NLG module 1227 may change designated information into a text form. The information changed into the text form may be in the form of a natural language utterance. The TTS module 1229 may change information in a text form into information in a speech form.

According to an embodiment, some or all of the functions of the natural language platform 1220 may be implemented in the electronic device 101 as well.

The capsule DB 1230 may store information on the relationship between the plurality of concepts and actions corresponding to the plurality of domains. A capsule according to an embodiment may include a plurality of action objects (or action information) and concept objects (or concept information) included in the plan. According to an embodiment, the capsule DB 1230 may store a plurality of capsules in the form of a concept action network (CAN). According to an embodiment, the plurality of capsules may be stored in a function registry included in the capsule DB 230.

The capsule DB 1230 may include a strategy registry that stores strategy information necessary for determining a plan corresponding to a voice input. The strategy information may include reference information for determining one plan when a plurality of plans corresponding to the voice input are present. According to an embodiment, the capsule DB 1230 may include a follow-up registry that stores information on follow-up actions for suggesting a follow-up action to the user in a designated situation. The follow-up action may include, for example, a follow-up utterance. According to an embodiment, the capsule DB 1230 may include a layout registry that stores layout information that is information output through the electronic device 101. According to an embodiment, the capsule DB 1230 may include a vocabulary registry that stores vocabulary information included in capsule information. According to an embodiment, the capsule DB 1230 may include a dialog registry that stores information on a dialog (or an interaction) with the user. The capsule DB 230 may update the stored objects through a developer tool. The developer tool may include, for example, a function editor for updating an action object or a concept object. The developer tool may include a vocabulary editor for updating the vocabulary. The developer tool may include a strategy editor for generating and registering a strategy for determining a plan. The developer tool may include a dialog editor for generating a dialog with the user. The developer tool may include a follow-up editor for activating a follow-up objective and editing a follow-up utterance that provides a hint. The follow-up objective may be determined based on a current set objective, a preference of the user, or an environmental condition. In an embodiment, the capsule DB 1230 may also be implemented within the electronic device 101.

The execution engine 1240 may calculate a result using the generated plan. The end user interface 1250 may transmit the calculated result to the electronic device 101. Accordingly, the electronic device 101 may receive the result and provide the received result to the user. The management platform 260 may manage information used by the intelligent server 1200. The big data platform 1270 may collect data of the user. The analytic platform 1280 according to an embodiment may manage a quality of service (QoS) of the intelligent server 1200. For example, the analytic platform 1280 may manage the components and processing rate (or efficiency) of the intelligent server 1200.

The service server 1300 may provide a designated service (e.g., food order or hotel reservation) to the electronic device 101. According to an embodiment, the service server 1300 may be a server operated by a third party. The service server 1300 according to an embodiment may provide information used to generate a plan corresponding to the received voice input to the intelligent server 1200. The provided information may be stored in the capsule DB 1230. In addition, the service server 1300 may provide result information according to the plan to the intelligent server 1200.

In the integrated intelligence system described above, the electronic device 101 may provide various intelligent services to the user in response to a user input. The user input may include, for example, an input through a physical button, a touch input, or a voice input.

In an embodiment, the electronic device 101 may provide a speech recognition service through an intelligent app (or a speech recognition app) stored therein. In this case, for example, the electronic device 101 may recognize a user utterance or a voice input received through the microphone, and provide a service corresponding to the recognized voice input to the user.

In an embodiment, the electronic device 101 may perform a designated action alone or together with the intelligent server and/or a service server, based on the received voice input. For example, the electronic device 101 may execute an app corresponding to the received voice input and perform a designated action through the executed app.

In an embodiment, when the electronic device 101 provides a service together with the intelligent server 1200 and/or the service server 1300, the user terminal may detect a user utterance using the input module 150 and generate a signal (or voice data) corresponding to the detected user utterance. The user terminal may transmit the voice data to the intelligent server 1200 using the interface 177.

The intelligent server 1200 may generate, as a response to the voice input received from the electronic device 101, a plan for performing a task corresponding to the voice input or a result of performing an action according to the plan. The plan may include, for example, a plurality of actions for performing a task corresponding to a voice input of a user, and a plurality of concepts related to the plurality of actions. The concepts may define parameters input to the execution of the plurality of actions or result values output by the execution of the plurality of actions. The plan may include connection information between the plurality of actions and the plurality of concepts.

The electronic device 101 may receive the response using the interface 177. The electronic device 101 may output a voice signal generated inside the electronic device 101 to the outside using the sound output module 155, or may output an image generated inside the electronic device 101 to the outside using the display module 160.

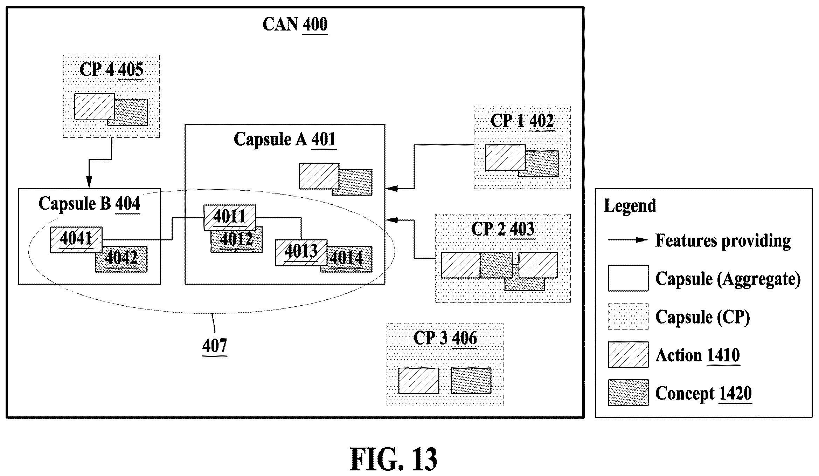

FIG. 13 is a diagram illustrating a form in which relationship information on relationships between concepts and actions is stored in a DB, according to various embodiments.

A capsule DB (e.g., the capsule DB 1230) of the intelligent server 1200 may store capsules in the form of a CAN. The capsule DB may store an action for processing a task corresponding to a voice input of a user and a parameter necessary for the action in the form of a CAN.

The capsule DB may store a plurality of capsules (a capsule A 401 and a capsule B 404) respectively corresponding to a plurality of domains (e.g., applications). According to an embodiment, one capsule (e.g., the capsule A 401) may correspond to one domain (e.g., a location (geo) or an application). In addition, one capsule may correspond to at least one service provider (e.g., CP 1 402, CP 2 403, CP 3 406, or CP 4 405) for performing a function for a domain related to the capsule. According to an embodiment, one capsule may include at least one action 1410 and at least one concept 1420 to perform a designated function.

The natural language platform 1220 may generate a plan for performing a task corresponding to the received voice input using the capsules stored in the capsule DB. For example, the planner module 1225 of the natural language platform may generate the plan using the capsules stored in the capsule DB. For example, a plan 407 may be generated using actions 4011 and 4013 and concepts 4012 and 4014 of the capsule A 410 and an action 4041 and a concept 4042 of the capsule B 404.

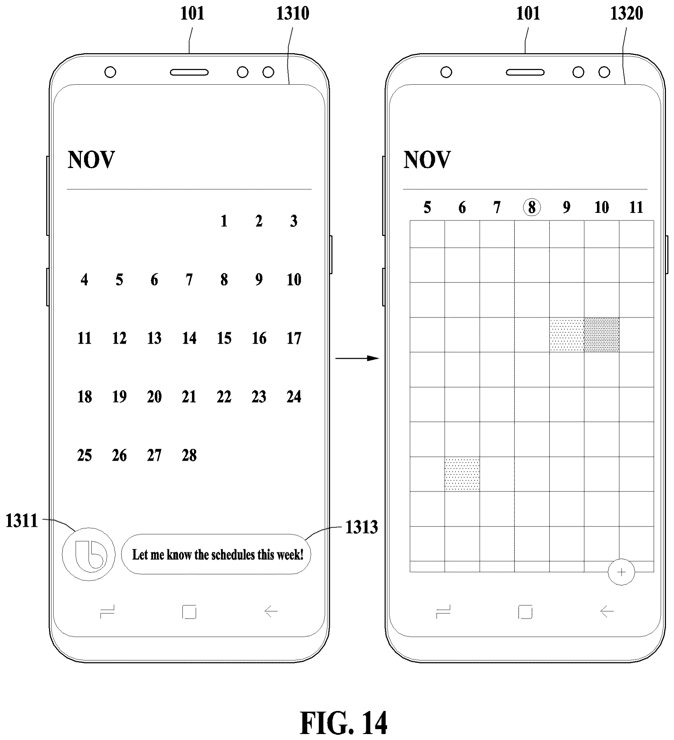

FIG. 14 is a diagram illustrating a screen of a user terminal processing a received voice input through an intelligent app according to various embodiments.

The electronic device 101 may execute an intelligent app to process a user input through the intelligent server 1200.

According to an embodiment, on a screen 1310, when a designated voice input (e.g., Wake up!) is recognized or an input through a hardware key (e.g., a dedicated hardware key) is received, the electronic device 101 may execute an intelligent app for processing the voice input. The electronic device 101 may execute the intelligent app, for example, in a state in which a scheduling app is executed. According to an embodiment, the electronic device 101 may display an object (e.g., an icon) 1311 corresponding to the intelligent app on the display module 160. According to an embodiment, the electronic device 101 may receive a voice input by a user utterance. For example, the electronic device 101 may receive a voice input of "Let me know the schedule this week!". According to an embodiment, the electronic device 101 may display a user interface (UI) 1313 (e.g., an input window) of the intelligent app in which text data of the received voice input is displayed on the display.

According to an embodiment, on a screen 1320, the electronic device 101 may display a result corresponding to the received voice input on the display. For example, the electronic device 101 may receive a plan corresponding to the received user input, and display "the schedules this week" on the display according to the plan.

An electronic device (e.g., the electronic device 101 of FIG. 1, the electronic device 200 of FIG. 2, or the wearable electronic device 300 of FIG. 3) according to various embodiments may include a processor (e.g., the processor 120 of FIG. 1). The processor 120 may receive an input from a user to display a first auxiliary virtual object or a second auxiliary virtual object. When the electronic device 101 is in an AR mode, the processor 120 may obtain a real object and spatial information based on an image of an external environment obtained using a camera (e.g., the camera module 180 of FIG. 1 or the camera module 250 of FIG. 2). The processor 120 may determine a shape and a position of the first auxiliary virtual object based on the real object and the spatial information. The processor 120 may control a display module (e.g., the display module 160 of FIG. 1 or the light output module 211 of FIG. 2) to display the first auxiliary virtual object based on the shape and the position of the first auxiliary virtual object. When the electronic device 101 is in a VR mode, the processor 120 may determine a shape and a position of the second auxiliary virtual object based on an attribute of a virtual environment and a virtual object. The processor 120 may control the display module 160 to display the second auxiliary virtual object based on the shape and the position of the second auxiliary virtual object.

In response to changing from the AR mode to the VR mode, the processor 120 may determine a correlation between the AR mode and the VR mode. The processor 120 may control the display module 160 to display a third auxiliary virtual object corresponding to the first auxiliary virtual object in the VR mode based on the correlation.

The processor 120 may determine the correlation based on whether the virtual object includes a virtual object corresponding to the real object. The processor 120 may determine a position where the third auxiliary virtual object is displayed, based on a position of the virtual object corresponding to the real object.

The processor 120 may determine the correlation based on whether the virtual environment corresponds to the spatial information. Based on the position where the first auxiliary virtual object is displayed in the spatial information, the processor 120 may determine the position where the third auxiliary virtual object is displayed in the virtual environment.

The processor 120 may determine the correlation based on whether the virtual environment corresponds to at least one of an execution time and an operation history of the first auxiliary virtual object. The processor 120 may determine the position where the third auxiliary virtual object is displayed based on the position of the virtual object in the virtual environment.

The processor 120 may determine the correlation based on whether the virtual environment is determined by an application related to the first auxiliary virtual object. The processor 120 may determine the position where the third auxiliary virtual object is displayed and a shape of the third auxiliary virtual object based on the virtual environment.

The processor 120 may determine the position of the first auxiliary virtual object in the AR mode based on brightness of the external environment and a position of a light source included in the spatial information. The processor 120 may determine the position of the second auxiliary virtual object in the VR mode based on the attribute of the virtual environment and the position of the virtual object.

The processor 120 may control the display module 160 to provide a result of processing a first voice command input from the user using the first auxiliary virtual object in the AR mode. The processor 120 may control the display module 160 to provide a result of processing a second voice command input from the user using the second auxiliary virtual object in the VR mode.

In response to changing from the VR mode to the AR mode, the processor 120 may determine the correlation between the VR mode and the AR mode. The processor 120 may control the display module 160 to display a fourth auxiliary virtual object corresponding to the second auxiliary virtual object in the AR mode based on the correlation.

The processor 120 may determine the correlation based on whether the real object includes a real object corresponding to the virtual object. The processor 120 may determine a position where the fourth auxiliary virtual object is displayed, based on a position of the real object corresponding to the virtual object.

The electronic device 101 according to various embodiments may include the processor 120. The processor 120 may receive an input from a user to display a first auxiliary virtual object. The processor 120 may control the display module 160 to display the first auxiliary virtual object based on a real object and spatial information about an external environment obtained using the camera 180 or 250 in the AR mode. In response to changing from the AR mode to the VR mode, the processor 120 may determine a correlation between the AR mode and the VR mode. The processor 120 may control the display module 160 to display a second auxiliary virtual object corresponding to the first auxiliary virtual object in the VR mode based on the correlation.

A method of controlling a display module according to various embodiments may include receiving an input from a user to display a first auxiliary virtual object or a second auxiliary virtual object, when an electronic device 101 is in an AR mode, obtaining a real object and spatial information based on an image of an external environment obtained using a camera 180 or 250, determining a shape and a position of the first auxiliary virtual object based on the real object and the spatial information, controlling a display module 160 to display the first auxiliary virtual object based on the shape and the position of the first auxiliary virtual object, when the electronic device 101 is in a VR mode, determining a shape and a position of the second auxiliary virtual object based on an attribute of a virtual environment and a virtual object, and controlling the display module 160 to display the second auxiliary virtual object based on the shape and the position of the second auxiliary virtual object.

The determining of the correlation may include, in response to changing from the AR mode to the VR mode, determining a correlation between the AR mode and the VR mode, and controlling the display module 160 to display a third auxiliary virtual object corresponding to the first auxiliary virtual object in the VR mode based on the correlation.

The determining of the correlation may include determining the correlation based on whether the virtual object includes a virtual object corresponding to the real object, and determining a position where the third auxiliary virtual object is displayed, based on a position of the virtual object corresponding to the real object.

The determining of the correlation may include determining the correlation based on whether the virtual environment corresponds to the spatial information, and based on the position where the first auxiliary virtual object is displayed in the spatial information, determining the position where the third auxiliary virtual object is displayed in the virtual environment.

The determining of the correlation may include determining the correlation based on whether the virtual environment corresponds to at least one of an execution time and an operation history of the first auxiliary virtual object, and determining the position where the third auxiliary virtual object is displayed based on the position of the virtual object in the virtual environment.

The determining of the correlation may include determining the correlation based on whether the virtual environment is determined by an application related to the first auxiliary virtual object, and determining the position where the third auxiliary virtual object is displayed and a shape of the third auxiliary virtual object based on the virtual environment.

The method of controlling the display module may further include determining the position of the first auxiliary virtual object in the AR mode based on brightness of the external environment and a position of a light source included in the spatial information, and determining the position of the second auxiliary virtual object in the VR mode based on the attribute of the virtual environment and the position of the virtual object.

The method of controlling the display module may further include controlling the display module 160 to provide a result of processing a first voice command input from the user using the first auxiliary virtual object in the AR mode, and controlling the display module 160 to provide a result of processing a second voice command input from the user using the second auxiliary virtual object in the VR mode.

The electronic device according to embodiments may be one of various types of electronic devices. The electronic device may include, for example, a portable communication device (e.g., a smartphone), a computer device, a portable multimedia device, a portable medical device, a camera, a wearable device, or a home appliance device. According to an embodiment of the disclosure, the electronic device is not limited to those described above.

It should be appreciated that embodiments of the disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things, unless the relevant context clearly indicates otherwise. As used herein, "A or B," "at least one of A and B," "at least one of A or B," "A, B or C," "at least one of A, B and C," and "at least one of A, B, or C," may include any one of the items listed together in the corresponding one of the phrases, or all possible combinations thereof. Terms such as "1st," and "2nd," or "first" or "second" may simply be used to distinguish the component from other components in question, and do not limit the components in other aspects (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., by wire), wirelessly, or via a third element.

As used in connection with embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., the internal memory 136 or the external memory 138) that is readable by a machine (e.g., the electronic device 101) For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read-only memory (CD-ROM)), or be distributed (e.g., downloaded or uploaded) online via an application store (e.g., PlayStoreTM), or between two user devices (e.g., smartphones) directly. If distributed online, at least portion of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components may be omitted, or one or more other components may be added. Alternatively or additionally, a plurality of components (e.g., modules or programs) may be integrated into a single component. In such a case, according to embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101; 200; 300) comprising:
a processor (120),
wherein the processor (120) is configured to:
receive an input from a user to display a first auxiliary virtual object or a second auxiliary virtual object;
when the electronic device (101; 200; 300) is in an augmented reality (AR) mode, obtain a real object and spatial information based on an image of an external environment obtained using a camera, and determine a shape and a position of the first auxiliary virtual object based on the real object and the spatial information,
control a display module (160; 211) to display the first auxiliary virtual object based on the shape and the position of the first auxiliary virtual object;
when the electronic device (101; 200; 300) is in a virtual reality (VR) mode, determine a shape and a position of the second auxiliary virtual object based on an attribute of a virtual environment and a virtual object, and
control the display module (160; 211) to display the second auxiliary virtual object based on the shape and the position of the second auxiliary virtual object.

2. The electronic device (101; 200; 300) of claim 1, wherein the processor (120) is configured to:
in response to changing from the AR mode to the VR mode, determine a correlation between the AR mode and the VR mode; and
control the display module (160; 211) to display a third auxiliary virtual object corresponding to the first auxiliary virtual object in the VR mode based on the correlation.

3. The electronic device (101; 200; 300) of claim 2, wherein the processor (120) is configured to:
determine the correlation based on whether the virtual object comprises a virtual object corresponding to the real object; and
determine a position where the third auxiliary virtual object is displayed, based on a position of the virtual object corresponding to the real object.

4. The electronic device (101; 200; 300) of any one of claims 2 and 3, wherein the processor (120) is configured to:
determine the correlation based on whether the virtual environment corresponds to the spatial information; and
based on the position where the first auxiliary virtual object is displayed in the spatial information, determine the position where the third auxiliary virtual object is displayed in the virtual environment.

5. The electronic device (101; 200; 300) of any one of claims 2 to 4, wherein the processor (120) is configured to:
determine the correlation based on whether the virtual environment corresponds to at least one of an execution time and an operation history of the first auxiliary virtual object; and
determine the position where the third auxiliary virtual object is displayed based on the position of the virtual object in the virtual environment.

6. The electronic device (101; 200; 300) of any one of claims 2 to 5, wherein the processor (120) is configured to:
determine the correlation based on whether the virtual environment is determined by an application related to the first auxiliary virtual object; and
determine the position where the third auxiliary virtual object is displayed and a shape of the third auxiliary virtual object based on the virtual environment.

7. The electronic device (101; 200; 300) of any one of claims 1 to 6, wherein the processor (120) is configured to:
determine the position of the first auxiliary virtual object in the AR mode based on brightness of the external environment and a position of a light source included in the spatial information; and
determine the position of the second auxiliary virtual object in the VR mode based on the attribute of the virtual environment and the position of the virtual object. V

8. The electronic device (101; 200; 300) of any one of claims 1 to 7, wherein the processor (120) is configured to:
control the display module (160; 211) to provide a result of processing a first voice command input from the user using the first auxiliary virtual object in the AR mode, and
control the display module (160; 211) to provide a result of processing a second voice command input from the user using the second auxiliary virtual object in the VR mode.

9. The electronic device (101; 200; 300) of any one of claims 1 to 8, wherein the processor (120) is configured to:
in response to changing from the VR mode to the AR mode, determine the correlation between the VR mode and the AR mode; and
control the display module (160; 211) to display a fourth auxiliary virtual object corresponding to the second auxiliary virtual object in the AR mode based on the correlation.

10. The electronic device (101; 200; 300) of claim 9, wherein the processor (120) is configured to:
determine the correlation based on whether the real object comprises a real object corresponding to the virtual object, and
determine a position where the fourth auxiliary virtual object is displayed, based on a position of the real object corresponding to the virtual object.

11. A method of controlling a display module, the method comprising:
receiving an input from a user to display a first auxiliary virtual object or a second auxiliary virtual object;
when an electronic device (101; 200; 300) is in an augmented reality (AR) mode, obtaining a real object and spatial information based on an image of an external environment obtained using a camera;
determining a shape and a position of the first auxiliary virtual object based on the real object and the spatial information;
controlling a display module (160; 211) to display the first auxiliary virtual object based on the shape and the position of the first auxiliary virtual object; and
when the electronic device (101; 200; 300) is in a virtual reality (VR) mode, determining a shape and a position of the second auxiliary virtual object based on an attribute of a virtual environment and a virtual object; and
controlling the display module (160; 211) to display the second auxiliary virtual object based on the shape and the position of the second auxiliary virtual object.

12. The method of claim 11, wherein the determining of the correlation comprises:
in response to changing from the AR mode to the VR mode, determining a correlation between the AR mode and the VR mode; and
controlling the display module (160; 211) to display a third auxiliary virtual object corresponding to the first auxiliary virtual object in the VR mode based on the correlation.

13. The method of claim 12, wherein the determining of the correlation comprises:
determining the correlation based on whether the virtual object comprises a virtual object corresponding to the real object; and
determining a position where the third auxiliary virtual object is displayed, based on a position of the virtual object corresponding to the real object.

14. The method of any one of claims 12 and 13, wherein the determining of the correlation comprises:
determining the correlation based on whether the virtual environment corresponds to the spatial information; and
based on the position where the first auxiliary virtual object is displayed in the spatial information, determining the position where the third auxiliary virtual object is displayed in the virtual environment.

15. The method of any one of claims 12 to 14, wherein the determining of the correlation comprises:
determining the correlation based on whether the virtual environment corresponds to at least one of an execution time and an operation history of the first auxiliary virtual object; and
determining the position where the third auxiliary virtual object is displayed based on the position of the virtual object in the virtual environment.
